# EUROPEAN PATENT APPLICATION

(11) **EP 2 866 454 A1**
(43) Date of publication of application: **29.04.2015**
(21) Application number: 13250107.3
(22) Date of filing: 25.10.2013
(51) Int. Cl.: H04N 21/266

(54) **Triple buffer key handling**

(71) Applicant: British Telecommunications public limited company, London EC1A 7AJ (GB)
(72) Inventor: The designation of the inventor has not yet been filed
(74) Representative: Lau, Chi-Fai

(57) **Abstract**

A method of handling encryption keys in a video delivery environment using a triple buffer arrangement: a pending buffer, a live buffer, and a current buffer. A set of content keys covering a number of time windows is generated by a secure key generating module, and loaded into the pending buffer where they are verified. Each content key is valid for period of time, with a number of days of keys requested at once. These keys are passed to the pending buffer in response to request. The validity of the content keys is checked as they are loaded into the pending buffer. If the content keys pass this check, then the keys are copied over to the live buffer from the pending buffer. The pending and live buffers are updated in this manner periodically, for example every 12 hours, or on request. The current buffer stores the content key that is valid for the current time window for encryption of a further key, a traffic key or code word. The content key in the current buffer is populated using the content key for the current time period from the live buffer, and used for encrypting the code word that is in turn used for scrambling video streams.

## Description

### Field of the Invention

This invention relates to a method and apparatus for controlling the delivery of content over a shared network.

### Background to the Invention

In IPTV systems, content is usually scrambled before transmission over a network to a set-top box (STB) using a symmetric traffic key, or code word. This allows the STB with a copy of the same traffic key to descramble the scrambled content. Various algorithms can be used, such as those set out by the Data Encryption Standard (DES), and Advanced Encryption Standard (AES). To increase security, the traffic key is usually changed periodically, which can be in the order of a number of seconds or minutes.

In order to be able to share the traffic key between the content server and the STB, the traffic key is encrypted using a content key to generate an entitlement control message (ECM). The ECM is sent with the scrambled content to the STB. The STB decrypts the ECM using a pre-fetched copy of the relevant content key to obtain the traffic key, which is then used to descramble the content. In order to maximise security, the content key can be changed periodically, say every 24 hours. However, significant problems can result in descrambling the content if failures occur in properly updating or maintaining the content key, as generation of the resulting traffic keys can be jeopardised. The secure environment in which these keys are handled typically requires separate secure modules for key generation, scrambling, and so on. This further increases the need for robust techniques for updating keys between the separate modules.

### Summary of the Invention

It is the aim of examples of the present invention to provide an improved method of managing encryption key updates.

According to one aspect of the present invention, there is provided-a method of handling encryption keys comprising:
i) receiving encryption key data from a key generation module into a first buffer, wherein the encryption key data comprises a plurality of encryption keys and a validity period associated with each encryption key; and
ii) checking the encryption key data, and copying the encryption key data from the first buffer to a second buffer only if the encryption key data is found to be valid after checking; then
iii) populating a third buffer with the encryption key from second buffer having an associated validity period for the current time; and
iv) encrypting a code word using the encryption key from the third buffer, wherein the code word is used for scrambling a video stream prior to transmission over a network.

Preferably, steps iii) and iv) are initiated following a request to encrypt a code word.

Steps i) and ii) may be repeated at intervals. This may be part of a normal polling event, to ensure that encryption keys are kept up to date. Alternatively, it may be an emergency polling event to try and resolve an actual problem with the encryption keys.

There may be a number of video streams, with each video stream scrambled with its own code word. Each of those code words may be encrypted using a different encryption key, with a different encryption key being associated with each of the video streams.

### Brief Description of the Drawings

For a better understanding of the present invention reference will now be made by way of example only to the accompanying drawings, in which:
Figure 1 is a network diagram showing a typical IPTV system;
Figure 2 is a block diagram showing the components of the security platform in more detail;
Figure 3 is a block diagram showing the encryption module in an example of the present invention;
Figure 4 is a block diagram showing the three buffers in the content key cache in an example of the present invention;
Figure 5 is a flow chart summarising the steps of loading the buffers in an example of the invention;
Figure 6 is a flow chart summarising the steps of using the key in the current buffer for encryption in an example of the invention.

### Description of Preferred Embodiments

The present invention is described herein with reference to particular examples. The invention is not, however, limited to such examples.

Examples of the present invention present a method of handling encryption keys in a video delivery environment using a triple buffer arrangement: a pending buffer, a live buffer, and a current buffer. A set of content keys covering a number of time windows is generated by a secure key generating module, and loaded into the pending buffer where they are verified. In specific examples, each content key is valid for a 24 hour period, and 48 hours of keys is requested, resulting in 3 keys being passed to the pending buffer in response to a given request. The validity of the content keys is checked as they are loaded into the pending buffer. If the content keys pass this check, then the 3 content keys are copied over to the live buffer from the pending buffer. The pending and live buffers are updated in this manner periodically, for example every 12 hours, or on request. The current buffer stores the content key that is valid for the current time window for encryption of a further key, a traffic key or code word. The content key in the current buffer is populated using the content key for the current time period from the live buffer, and used for encrypting a code word that is in turn used for scrambling video streams.

By using separate pending and live buffers, it is possible to retain existing content keys should there be any fault in the key generation and loading process, which might otherwise overwrite the existing valid content keys. A separate current buffer provides persistence of the active content key by providing separation between requests for new content keys from the content key currently in use for encryption. This also provides an added benefit in that the periodic updates to the content keys can be done at any time without having to lock the current buffer, which typically has to be read regularly for encrypting the code word used for scrambling video streams.

The use of the three buffers in combination with storing content keys spanning several time windows provides better tolerance to failures in the content key update process, and further techniques for extending the use of expired keys allows for continued encryption in extreme failure scenarios.

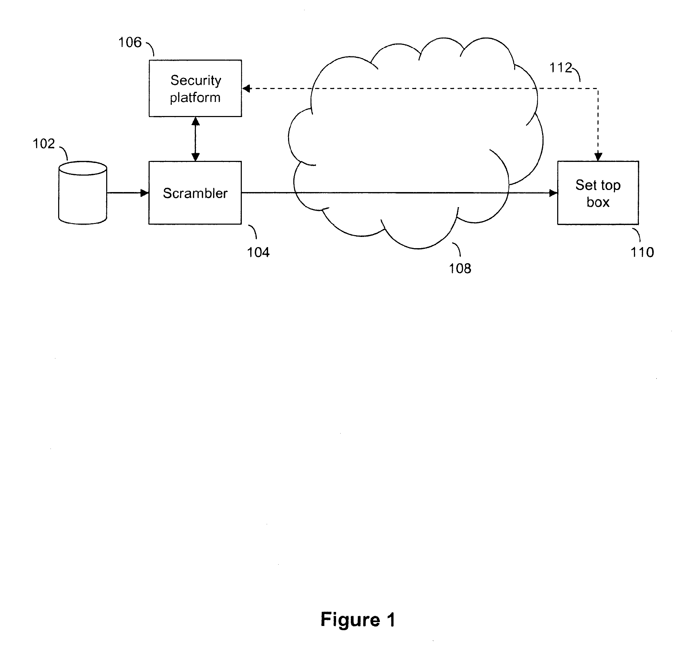

Figure 1 is a simplified network diagram showing an IPTV network 100 capable of delivering video streams to a set-top box. The network 100 comprises a content source 102 which provides video streams to a scrambler 104. The video streams are clear video streams and encoded using the ITU H.264 compression format, with one video stream per session/channel. The video streams are passed from the content source 102 to the scrambler 104, and the scrambler 104 scrambles the clear video using the AES-128 encryption standard, though other standards can be used. Here, the AES-128 algorithm uses a traffic key, or code word, that is randomly re-generated every 10 seconds in this example. A different code word is used for each channel. The scrambler 104 transmits the scrambled video streams together with the associated code words encrypted using a content key. The encrypted code words are sometimes referred to as an entitlement control messages (ECMs) in this video delivery arrangement. Each ECM has to be recalculated every time the corresponding code word is re-generated. The scrambled video streams and the corresponding ECMs are transmitted over a network 108 to a set top box (STB) 110. For simplicity, only one STB is illustrated, though in practice there may be many thousands of STBs, all receiving the scrambled video streams and the corresponding ECMs.

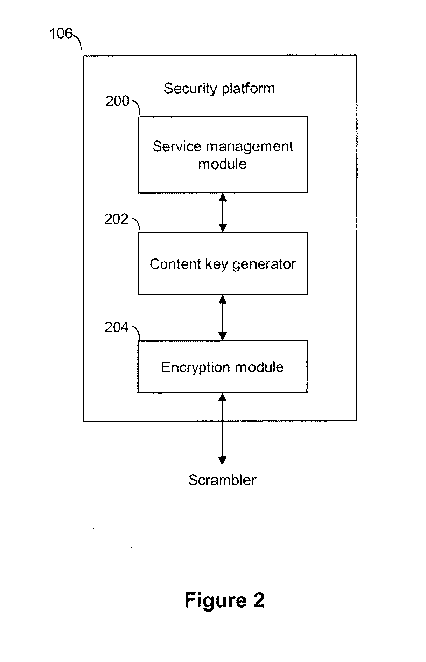

The encryption of code words to generate ECMs is handled by the security platform 106 connected to the scrambler 104. Figure 2 shows the security platform 106 in more detail. The security platform 106 comprises a service management module 200, a content key generator 202, and an encryption module 204. The scrambler 104 makes a request to the encryption module 204 for each ECM by passing to the encryption module 204 a code word. The encryption module 204 encrypts the received code word using an encryption key, referred to here as a content key, and returns the ECM to the scrambler 104.

In practice, as there are multiple channels, each scrambled with its own randomly generated code word, the scrambler 104 will make multiple requests to the encryption module 204 for multiple ECMs.

Each channel has an associated content key, which are shared with the STB 110, thus allowing the STB 110 to decrypt the received ECM, and then use the resulting clear code word to descramble the relevant video stream. Content keys are generated by the content key generator 202, and passed to the STB 110 by the service management module 200.

A new content key is periodically generated by the content key generator for each channel to further improve security, with a given content key being valid for a time period, or validity period, of 24 hours for the associated channel. A skilled person will appreciate that this validity period, can be longer or shorter than 24 hours.

The scrambler 104 and the security platform 106 are implemented on a computing platform such as a network server. As discussed below, the scrambler and security platform, as well as the individual components of the security platform, can be split across multiple servers, each of which can be located in different geographical locations. This separation of the individual modules avoids single point of failure problems at a single server, and makes implementing duplicate/back-up modules more straightforward. For example, implementing a primary content key generator and a separate back-up content key generator, and similarly a primary and a back-up encryption module. Both the primary and back-up content key generators will have multiple network interfaces that allow for full interconnection to each of the primary and back-up encryption modules.

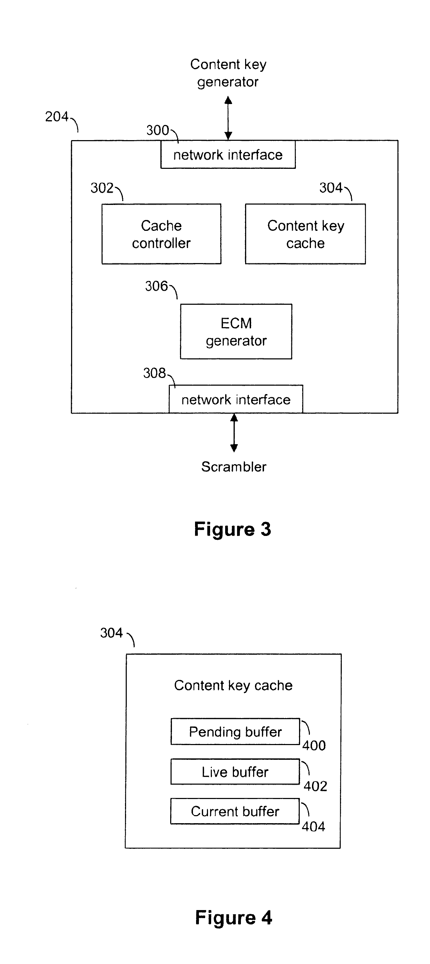

Figure 3 shows the encryption module 204 in more detail, comprising a network interface 300, a cache controller 302, a content key cache 304, an ECM generator 306, and a further network interface 308. The encryption module 204 communicates with the content key generator via the network interface 300. The encryption module 204 can make requests for content keys from the content key generator 202 via the network interface 300. The response from the content key generator is handled by the cache controller 302 in conjunction with the content key cache 304. The content key cache is a storage means such as RAM, a hard disk, secure hardware, or similar, and is where content keys received from the content key generator are stored. The ECM generator 306 is responsible for generating ECMs in response from requests from the scrambler 104 received over the network interface 308.

The content key cache 304 is shown in more detail in Figure 4, and comprises three buffers: a pending buffer 400, a live buffer 402, and a current buffer 404.

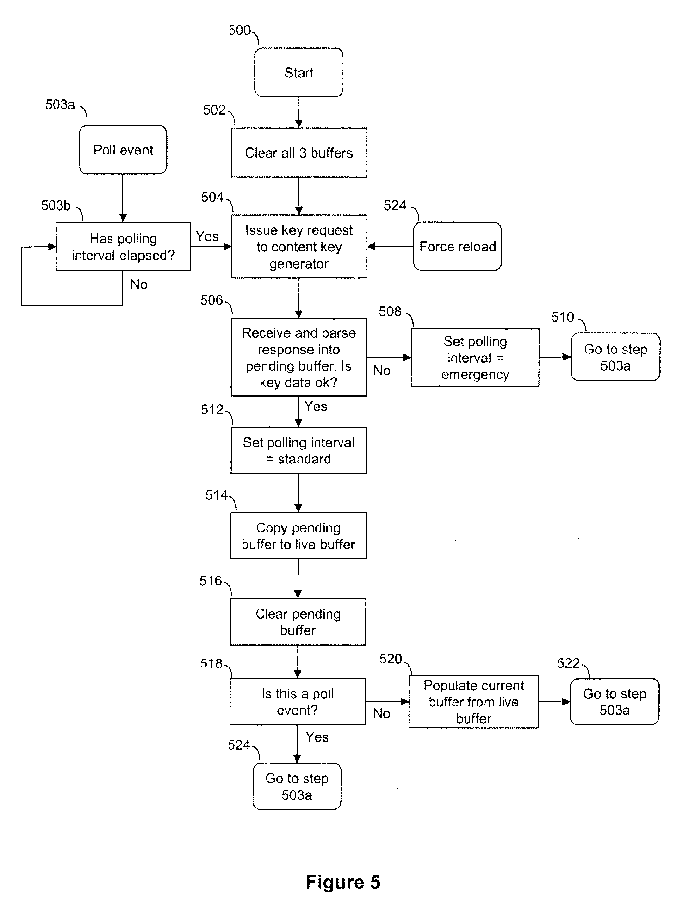

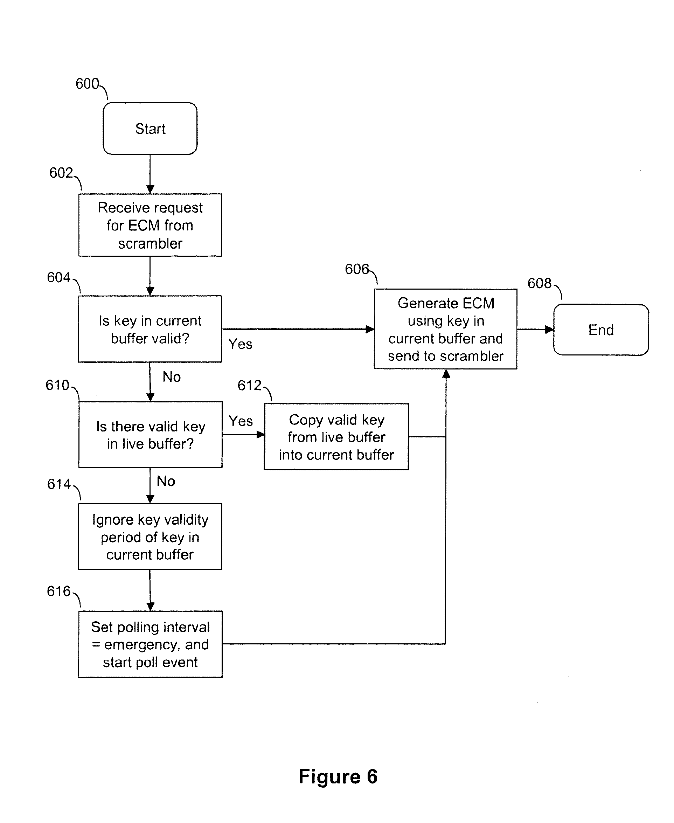

The operation of the above components in the encryption module 204 in the handling of content keys and generating of ECMs will now be described by way of example with reference to the flow charts of Figure 5 and Figure 6.

Figure 5 describes the processes for handling content keys received from the content key generator 202, and the maintenance of those keys. Processing starts at step 500, where the encryption module first starts-up or following a restart, and has yet to receive any content keys.

Next, in step 502, the cache controller 302 clears down all three buffers (pending, live and current) to remove any data that might be present. Then, in step 504, a request is issued to the content key generator 504 for content keys. In this situation where the encryption module has just started-up, the request is for the content keys covering all available channels, and covering a fixed time window starting from the current time. Here, the time window is 48hours. As each content key is valid for a 24 hour period, a request at any given time should result in 3 content keys being returned per channel. Thus, the expected response from the content key generator should be a number of sets of encryption key data, one set per channel, where each set of encryption key data contains 3 content keys and further data associated with each of those content keys, such as the validity period and channel identifier.

In step 506, a response to the request is received from the content key generator 202. The response takes the form of an XML file, defining sets of encryption key data outlined above. The cache controller parses the XML file to extract the embedded data, which includes, one set per channel, the actual content keys and a validity period for each content key. The parsed data is moved to the pending buffer, and held in a hash table indexed one channel ID. The act of parsing checks the integrity of the XML ensuring it is firstly readable XML and further that the elements and attributes are compliant with the specified schema. The key data extracted from the parsed XML is additionally checked for integrity by checking for example key lengths and validity periods. If the received XML is compliant and key data is considered to be valid at this stage, then processing passes to step 512.

However, if there is a problem with XML or the key data, then an emergency polling process is initiated where the encryption module makes repeated requests to the content key generator for content key data until valid key data is received. This is triggered by moving to step 508, and will be described later, after the description of a successful key load.

Assuming the key data is valid after step 506, processing moves to step 512, where the polling interval is set to standard. In this example, a standard interval is 12 hours, but can be set to a longer or shorter interval of time. The polling interval effectively determines when the encryption module is to make another request to the content key generation module for content keys.

In step 514, the key data in the pending buffer is copied into the live buffer, with the pending buffer then cleared down in step 516.

In step 518, a check is made to see if the current event is a poll event. As this is a start-up event, and not a poll event, processing passes to step 520. In step 520, the current buffer is populated from the live buffer. This involves copying over all content key data for any content keys that have a validity period covering the current time. In practice, this will mean that the data for one content key (from the 3 that should be in live) per channel along with its validity period is copied over. Therefore, the current buffer holds all the currently active content keys based on the associated validity period data.

All keys have been successfully loaded now, and the active keys for the current validity period have been loaded into the current buffer, ready to be used by the ECM generator, as will be described later with reference to Figure 6. The start-up event has effectively finished, and processing then passes to step 522, and back up to 503a, where a polling event starts.

In step 503a, a polling event starts. In step 503b, a check is made on whether the polling interval has elapsed. Assuming here that the last event was a successful start-up, then the polling interval is set to 12 hours, and thus step 503b repeatedly checks to see if this interval has elapsed before passing processing over to step 504.

Step 504 onwards is as described above, with the encryption module requesting content key data from the content key generator. Depending on the present time in relation to the validity periods of the content keys previously generated, this process may result in key data being received that covers a new validity period, and consequently new content keys.

Assuming the key data received is valid, then processing continues as described above through steps 506, 512, 514, and 516. At step 518, a check is made to determine whether the current event is a poll event, which it is, and thus processing passes to step 524, which simply reverts back to step 503a to start another poll event.

Thus, by making use of poll events, the encryption module makes requests to the content key generator at regularly polling intervals for up to date content keys.

For the poll event just described, there is no updating to the current buffer as part of the poll event itself (see step 518, where processing does not pass to step 520). Instead, any required updates to the current buffer, for example in the event that a content key in the current buffer has expired, is driven by the operation of the ECM generator as will be described below with reference to Figure 6.

As suggested above, the checks on the key data at step 506 can signal invalid key data. In such instances, processing passes to step 508 to start an emergency polling event in order to request the key data again. In step 508, the polling interval is set to emergency, which in this case is 5 minutes. This interval allows for problems in the key request process to resolve themselves, such as a reconnection of a failed connection between the content key generator and the encryption module, or a swap over to the back-up content key generator if the original one had failed. At step 510, processing passes to 503a, where a poll event is started. The poll event here is an emergency poll event, with the interval set to 5 minutes. Thus, in step 503b, the process waits until the 5 minutes has elapsed before passing onto step 504. Then from step 504 onwards, the processing is as described earlier, with either successful validation at step 506 and thus onward processing through to step 524, or key load failure leading back to step 508 and another emergency poll event entered into with a poll interval of 5 minutes.

At any time, an operator can also manually issue a "Reload" command to force an update of the content keys. This is shown by step 524. Under normal polling, the current buffer is never cleared, only updated, so any channels present in the previous content key generator response to a key request will have a corresponding entry in the current buffer. By clearing the current buffer, any channels that might have been removed from service will have their content keys removed from the current buffer that would otherwise remain until their key validity period had expired. Once a reload command is issued, a key request is made and normal processing continues to step 518, where the current buffer is cleared before updating it from the live buffer. This ensures that the current buffer is not cleared should there be a failure in the Ikey loading process.

The processes described above referencing Figure 5 are controlled by the cache controller 302, and utilises the content key cache 300. The process of Figure 5 is continuously cycled through, with the check at step 503b throttling the rate at which key requests and updates are made.

The above process illustrates how the encryption module is able to load new keys from the content key generator and maintain them in a robust manner. In particular, by using a separate pending buffer, any existing keys in the live buffer are effectively retained until a successful check of the key data that is initially loaded into the pending buffer has been completed. Any failure in the loading of key data into the pending buffer will not cause what might still be perfectly valid content keys in the live buffer to be overwritten. A separate current buffer provides persistence of the active content key by providing separation between requests for new content keys from the content key currently being used for ECM generation.

Turning now back to the scrambler 104 and the transmission of video streams. The scrambler 104 receives clear video streams, one stream per channel, which it scrambles using a randomly generated code word before transmitting onto the STB 110. The scrambler also transmits an ECM with each scrambled stream, where the ECM is generated by encrypting the code word using the content key for the relevant channel. As the code word is changed every 10 seconds, a new ECM needs to be generated every 10 seconds as well. The ECM generation is handled by the ECM generator 306, triggered by requests made by the scrambler 104.

The operation of the ECM generator 306 will now be described with reference to the flow chart of Figure 6. Processing starts at step 600. Then in step 602, the ECM generator 306 receives a request for an ECM from the scrambler 104 over the network interface 308. The received request includes the code word that needs encrypting into an ECM, together with an indication of the channel for which code word relates.

In step 604, the ECM generator 306 examines the validity period of the corresponding content key for the indicated channel. If the validity period covers the current time, then processing passes to step 606, and the relevant content key from the current buffer is used to generate an ECM by encrypting the received code word using the content key. The resulting ECM is sent back to the scrambler 104, and processing finishes at step 608. The scrambler 104 then inserts the received ECM into the relevant video stream, and transmits the video stream to the STB 110.

However, if at step 604, the validity period of the content key in the current buffer for the requested channel has expired, then processing passes to step 610. In step 610, a check is made by the ECM generator 306 to see if there is a content key for the requested channel with a valid validity period (covering the present time) in the live buffer. If there is, then in step 612, the valid key is copied from the live buffer to the current buffer. Processing then passes to step 606, where the content key now in the current buffer is used to generate an ECM by encrypting the received code word using the content key, before sending the resulting ECM back to the scrambler 104.

If at step 610 there is not a content key in the live buffer with a validity period that covers the present time, then processing passes to step 614. In step 614, the validity period of the key in the current buffer is ignored. Thus, the last valid content key for the relevant channel will be used in this instance, as there is effectively no valid content key for the channel in any of the buffers. In step 616, the polling interval used by the cache controller in Figure 5 to update the content keys is set to emergency, which as described earlier, is typically 5 minutes. The poll event starting at step 503a is also triggered if it is not already in progress. Therefore, an attempt is made to request updated content keys from the content key generator, and update the content keys in the live buffer and ultimately the current buffer. Meanwhile, processing passes to step 606, where an ECM is generated using the content key in the current buffer (note, we have ignored the validity period to extend the use of the expired content key), before sending the resulting ECM back to the scrambler 104.

This last scenario where there is not a valid key in the live buffer may occur if there has been a long term failure (for example, of several days), of either the content key generator, or perhaps from misconfiguration of the content key generator perhaps resulting in missing channels. However, the above process caters for such an extreme situation by effectively extending the use of the invalid key that is in the current buffer, which means that scrambling is not adversely affected, and delivery of scrambled video streams is still possible. Meanwhile, the method attempts to update the content keys by initiating an emergency polling event.

Following the generation of ECMs, and their subsequent transmission with the scrambled video streams, the streams are transmitted to the STB 110. The STB 110 can decode the ECMs using relevant copies of the content keys, and then use the resulting code words to descramble the video streams. The STB 110 can get copies of the content keys used by the ECM generator via a separate link to the service management platform, 200. This link is usually an HTTPS connection, but can be some other suitably secure connection. The service management platform 200 is sent copies of the content key data that is sent to the encryption module, which it can send onto the STB 110. The service management platform 200 may only send content key data for a subset of the total available channels depending on the channels the customer has subscribed to.

Whilst the above example is in relation to a IPTV system, a person skilled in the art will appreciate that the approach can also be applied to other systems, such as a broadcast TV system, or even an on-demand video delivery system where the video/channels are only streamed to the STB when specifically requested.

Exemplary embodiments of the invention are realised, at least in part, by executable computer program code which may be embodied in an application program data. When such computer program code is loaded into the memory of a processor in the encryption module, it provides a computer program code structure which is capable of performing at least part of the methods in accordance with the above described exemplary embodiments of the invention.

A person skilled in the art will appreciate that the computer program structure referred to can correspond to the functional modules shown in Figure 3, or the flow charts shown in Figure 5 and Figure 6, where each step of the flow chart can correspond to at least one line of computer program code and that such, in combination with the processor in the encryption module, provides apparatus for effecting the described process.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of handling encryption keys comprising:
i) receiving encryption key data from a key generation module into a first buffer, wherein the encryption key data comprises a plurality of encryption keys and a validity period associated with each encryption key; and
ii) checking the encryption key data, and copying the encryption key data from the first buffer to a second buffer only if the encryption key data is found to be valid after checking; then
iii) populating a third buffer with the encryption key from second buffer having an associated validity period for the current time; and
iv) encrypting a code word using the encryption key from the third buffer, wherein the code word is used for scrambling a video stream prior to transmission over a network.

2. A method according to claim 1, wherein steps iii) and iv) are initiated following a request to encrypt a code word.

3. A method according to claim 1 or 2, wherein steps i) and ii) are repeated at intervals.

4. A method according to any preceding claim, wherein the encryption keys are associated with one of a plurality of video streams.
